# FASCICULE DE BREVET EUROPEEN

(11) **EP 0 615 800 B1**
(45) Date de publication et mention de la délivrance du brevet: **30.07.1997**
(21) Numéro de dépôt: 94400403.5
(22) Date de dépôt: 24.02.1994
(51) Int. Cl.: B21K 1/54

(54) **Vis à extrémité ogivale et procédé d'obtention**
Schraube mit spitzbogenförmigen Ende und Verfahren zu seiner Herstellung
Screw with ogive point and process for its production

(30) Priorité: 17.03.1993 FR 9303092
(43) Date de publication de la demande: 21.09.1994
(73) Titulaire: FORMER, F-90101 Delle Cédex (FR)
(72) Inventeur: Daviet, Bernard, F-78870 Bailly (FR); Derriennic, Yvon, F-35580 Lassy (FR); Walter, Jean-Luc, F-90100 Delle (FR)
(74) Mandataire: Phélip, Bruno

(56) Documents cités:
- EP-A- 0 071 844
- CH-A- 118 382
- DE-A- 2 122 911
- GB-A- 435 304
- US-A- 4 724 694
- PATENT ABSTRACTS OF JAPAN vol. 6, no. 150 (M-148) (1028) 10 Août 1982 & JP-A-57 070 047 (KURAUN SEIMITSU KOGYO KK) 30 Avril 1982

## Description

L'invention concerne une vis à extrémité ogivale ainsi qu'un procédé d'obtention de cette vis. Elle concerne plus particulièrement une vis à extrémité ogivale auto-nettoyeuse (voir par example DE-A-2 122 911).

Dans les systèmes de fixation classiques, comportant généralement une vis et un écrou ou une vis et un trou taraudé, de nombreux inconvénients peuvent apparaître lors du vissage. Par exemple, la vis peut présenter un angle par rapport à l'axe de l'écrou ou du trou taraudé dans lequel elle est introduite. Ceci peut entraîner un cas de foirage lors du vissage, c'est-à-dire une défaillance du montage. Cela se traduit par un blocage ou une destruction partielle ou totale du filet de la vis, de l'écrou ou de l'ensemble. Lorsque ce phénomène se produit, par exemple sur les chaînes de fabrication d'automobiles, on est amené à effectuer, soit des démontages-remontages, soit même des retouches, en dehors de la ligne de montage, extrêmement coûteuses et source de non qualité. Afin d'éviter ce genre d'inconvénients, on peut être amené à effectuer un prévissage manuel, opération également très coûteuse.

Un autre solution consiste à proposer des vis à bout pilote conique ou cylindro-conique, non fileté, par exemple. Cependant, ces vis présentent également des inconvénients car elles générent un pourcentage non négligeable de foirages.

Ce sont finalement les vis à extrémité en forme d'ogive qui peuvent le mieux répondre aux problèmes posés. Ces vis comportent un filetage jusqu'à leur extrémité ogivale. Lors du vissage, même si la vis présente un angle par rapport à l'axe de l'écrou ou du trou fileté, dans une limite d'environ 20°, la vis se redresse progressivement lors du vissage pour se placer dans l'axe de l'écrou. Les risques de foirage sont ainsi considérablement réduits.

Les vis à extrémité ogivale qui sont aujourd'hui sur le marché ne sont pas encore satisfaisantes car elles ne présentent pas un filetage régulier, en ce qui concerne le remplissage de la partie ogivale. Ainsi, les sommets des filets de ces vis ne se situent pas tous sur le plan enveloppe de la partie ogivale de la vis. Ceci présente des inconvénients dans la mesure où des vis ne présentant pas un filetage régulier ne permettent pas de réaliser parfaitement la fonction de réalignement.

De plus, ces vis peuvent présenter des extrémités coupantes qui sont à éliminer pour des raisons de sécurité lors de la pose.

Le filetage de l'écrou dans lequel la vis est introduite est souvent recouvert de peinture, de mastic ou encore de projections de soudure. Il est donc nécessaire de prévoir des moyens d'auto-nettoyage sur la vis.

Ainsi, les vis autonettoyeuses classiques comportent des goujures relativement larges, parallèles ou non à l'axe de la vis, dans lesquelles les déchets peuvent s'accumuler.

Les vis à extrémité ogivale qui sont aujourd'hui disponibles présentent des moyens d'auto-nettoyage mais qui sont situés sur la partie cylindrique de la vis et non sur la partie ogivale. De tels moyens sont imparfaits puisqu'ils sont situés en arrière des premiers filets.

On peut alors prévoir des moyens d'auto-nettoyage sur l'extrémité ogivale de la vis, comparables à ceux qui existent pour les vis cylindriques. On constate cependant qu'une telle solution n'est pas satisfaisante. En effet, des moyens d'auto-nettoyage connus consistent en des encoches de taille relativement importante et dont le fond est parallèle à l'axe de la vis. Un filet de l'extrémité ogivale peut alors engager dans deux filets ou plus de l'écrou simultanément, ce qui entraîne le blocage de la vis et/ou le foirage.

Il est donc apparu nécessaire de mettre au point des moyens d'auto-nettoyage qui, bien que situés sur l'extrémité ogivale de la vis pour être efficaces, n'entraînent aucun foirage.

L'invention apporte une solution aux problèmes techniques posés par les systèmes de fixation classiques en proposant un procédé de fabrication d'une vis à extrémité ogivale permettant d'obtenir des filets réguliers, un diamètre final précis en extrémité de vis et ne présentant pas de partie coupante.

Ainsi, l'invention concerne un procédé d'obtention d'une vis à extrémité ogivale selon la revendication 1.

Dans une première variante, on réalise l'extrémité ogivale pendant l'étape de frappe en réduisant, à l'extrémité de la tige, le diamètre de celle-ci par une opération de filage puis une opération de chanfreinage par frappe à froid (boutage).

Dans une deuxième variante, on réalise l'extrémité ogivale par usinage.

De préférence, les moyens utilisés lors de l'étape de roulage pour la formation des filets présentent une enveloppe sensiblement identique à celle de l'extrémité ogivale obtenue avant l'étape de roulage.

De façon préférée, le procédé consiste à réaliser des moyens d'auto-nettoyage sur l'extrémité ogivale de la vis.

Ces moyens d'auto-nettoyage sont donc beaucoup plus efficaces que ceux des vis à extrémité ogivale connues, lesquels se situent sur la partie cylindrique de la vis.

Dans un premier mode de réalisation, on réalise, avant l'étape de roulage, des rainures sur l'extrémité ogivale de la vis.

Dans une première variante, les rainures présentent une largeur telle que la largeur des rainures obtenues après l'étape de roulage est inférieure à celle d'un filet.

Dans une deuxième variante, la forme des rainures est telle qu'après l'étape de roulage, le filet présente une section non constante ménageant des évidements.

Dans un deuxième mode de réalisation, on réalise des rainures sur l'extrémité ogivale de la vis, pendant l'étape de roulage.

Dans une variante, les rainures sont parallèles à l'axe de la vis.

Dans une autre variante, les rainures font un angle non nul avec l'axe de la vis.

Dans un troisième mode de réalisation, le procédé consiste à réaliser des crans sur les filets pendant l'étape de roulage, lesdits crans ménageant des espaces.

L'invention concerne également une vis à extrémité ogivale selon la revendication indépendante 13. Des modes particuliers de réalisation de l'invention sont indiqués dans les revendications dépendantes 14 à 18.

Dans une première variante, les moyens d'auto-nettoyage sont constitués par des rainures.

De préférence, la vis présente un nombre de rainures supérieur ou égal à 8.

Dans une deuxième variante, les moyens d'auto-nettoyage sont constitués par les évidements que présente le filet de section variable.

Dans une troisième variante, les moyens d'auto-nettoyage sont constitués par des espaces ménagés par les crans que présente le filet.

L'invention sera mieux comprise et d'autres buts, avantages, caractéristiques de celle-ci apparaîtront plus clairement à la lecture de la description qui suit, faite au regard des dessins annexés sur lesquels :
- la figure 1 (figures 1a et 1d) représente quatre étapes d'obtention d'une première forme de réalisation d'une vis à extrémité ogivale et auto-nettoyeuse selon l'invention,
- la figure 2 représente une première variante de la première forme de réalisation selon la figure 1,
- la figure 3 représente une deuxième variante de la première forme de réalisation selon la figure 1,
- la figure 4 représente une troisième variante de la première forme de réalisation selon la figure 1,
- la figure 5 représente une quatrième variante de la première forme de réalisation selon la figure 1,
- la figure 6 (avec détail A) représente une deuxième forme de réalisation d'une vis à bout ogival auto-nettoyeur selon l'invention,
- la figure 7 représente une variante de la deuxième forme de réalisation selon la figure 6,
- la figure 8 représente une troisième forme de réalisation d'une telle vis,
- la figure 9 illustre une variante de la troisième forme de réalisation selon la figure 8 et
- la figure 10 représente, en demi-coupe axiale, l'enveloppe de la tige.

Un procédé classique d'obtention d'une vis à partir d'un fil, comprend essentiellement deux étapes. Tout d'abord, une étape de frappe pendant laquelle on réalise la tête et la tige de la vis puis une étape de roulage, pendant laquelle les filets sont formés.

Le procédé selon l'invention qui permet d'obtenir une vis à extrémité ogivale, reprend ces étapes.

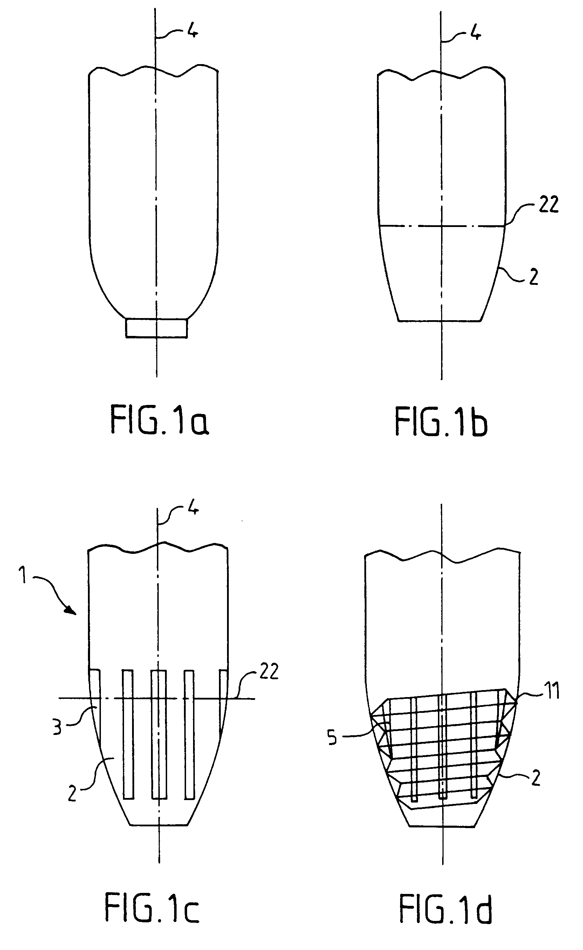

Il consiste d'abord à réduire le diamètre d'une tige donnée, à son extrémité, par une opération de filage. La tige prend alors la forme illustrée à la figure 1a.

Le procédé consiste ensuite à réaliser l'extrémité ogivale de la vis avant l'étape de roulage, la tige obtenue est illustrée à la figure 1b. La référence 22 désigne la liaison entre la partie cylindrique et l'extrémité ogivale 2 de la vis 1.

L'extrémité ogivale peut être réalisée par une opération de chanfreinage par frappe à froid (boutage). Elle peut également être obtenue par tout autre moyen, en particulier par usinage.

On peut également noter que l'extrémité ogivale peut être directement usinée à partir d'une tige cylindrique, sans opération préalable de filage.

Il est intéressant de réaliser l'extrémité ogivale par une opération de boutage car celle-ci est réalisée sur la machine de frappe. Ceci permet de réduire le nombre d'opérations, le procédé de fabrication est donc plus court. De plus, ce procédé garantit que l'axe de la tige coïncide avec celui de l'extrémité ogivale.

L'extrémité ogivale définit une enveloppe dont la forme correspond sensiblement à celle obtenue après l'étape de roulage, c'est-à-dire après la formation des filets.

L'étape de roulage s'effectue de façon classique, les moyens utilisés (peignes) sont simplement adaptés à la forme de l'ogive de façon à parfaitement remplir les filets.

En particulier, les moyens utilisés pendant l'étape de roulage présentent une enveloppe sensiblement identique à celle de l'extrémité ogivale obtenue avant l'étape de roulage.

Ce procédé permet d'obtenir une forme d'ogive sensiblement parfaite à l'extrémité de la tige de la vis. Il garantit de plus un diamètre final maîtrisé en bout de tige. Cette donnée est généralement imposée par les constructeurs pour des raisons de sécurité au moment de la pose et pour des raisons de montage automatisé ou robotisé.

On constate de plus que sur la vis réalisée, après l'étape de roulage, les filets sont réguliers, en ce qui concerne leur remplissage, c'est-à-dire que les sommets 16 des filets 11 se situent sur l'enveloppe 15 de la tige, illustrée à la figure 10. Ceci assure un engagement sans à-coups et un vissage régulier.

Enfin, la pièce finale ne comporte aucune bavure ou de partie coupante qui sont à éviter pour des raisons de sécurité.

Ainsi, ce procédé présente l'avantage de fournir des produits qui sont pratiquement identiques et qui présentent donc des performances constantes. Il met de plus en oeuvre des outillages adaptés dont la durée de vie est plus longue que pour les procédés connus, du fait de la parfaite adaptation des formes entre la vis après l'étape de frappe et les moyens utilisés lors de l'étape de roulage.

Une vis à extrémité ogivale, obtenue selon ce procédé, peut se redresser pour se placer dans l'axe de l'écrou ou du trou fileté lorsqu'elle présente, lors du vissage, un angle inférieur ou égal à 20° par rapport à cet axe. On constate que les risques de foirage sont diminués de plus de 60 % par rapport à des vis à extrémité ogivale classiques.

Comme expliqué précédemment, il est souvent nécessaire de prévoir des moyens d'auto-nettoyage sur l'extrémité ogivale de la vis, étant entendu que ces moyens d'auto-nettoyage peuvent se prolonger également sur la partie cylindrique. A cet effet, l'invention propose plusieurs solutions.

On peut tout d'abord envisager de réaliser des rainures parallèles sur l'extrémité ogivale de la vis, ces rainures se prolongeant au-delà de la liaison 22, sur la partie cylindrique de la vis 1, comme illustré sur la figure 1c. Celle-ci montre une vis 1 dont l'extrémité ogivale 2, obtenue lors de l'étape de frappe présente des rainures 3 parallèles à l'axe 4 de la vis. Ces rainures sont de préférence obtenues pendant l'étape de frappe.

La vis subit ensuite l'étape de roulage. Cette étape fait apparaître des rainures 5 qui coupent le filet 11. La taille des rainures 5 est sensiblement inférieure à celle des rainures 3.

Les rainures peuvent aussi être réalisées, de façon classique, pendant l'étape de roulage, avec des peignes comportant des inserts à cet effet.

La largeur des rainures 3, réalisées pendant l'étape de frappe, est choisie de telle sorte que la largeur des rainures 5, obtenues après étape de roulage, soit sensiblement inférieure à la section d'un filet.

Lorsque les rainures sont réalisées pendant l'étape de roulage, leur largeur est également choisie pour que leur largeur soit inférieure à la section d'un filet.

Ainsi, tout risque de foirage est évité. La largeur des rainures n'est pas nécessairement constante.

Dans ces rainures 5, peuvent s'accumuler les déchets qui sont présents dans l'écrou ou le trou dans lequel est vissée la vis à extrémité ogivale. Ces moyens d'auto-nettoyage sont particulièrement efficaces dans la mesure où ils sont situés en partie dans l'extrémité ogivale de la vis, en particulier dans la zone de la liaison 22 entre l'ogive et la partie cylindrique.

Les rainures ne sont pas nécessairement parallèles à l'axe 4 de la vis.

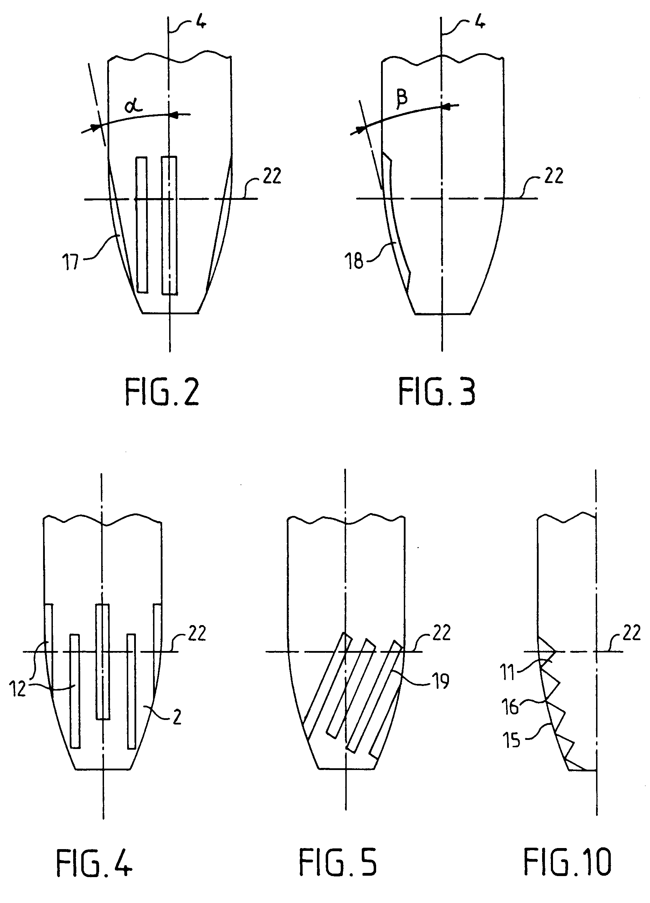

Ainsi, comme illustré aux figures 2 et 3, les rainures obtenues avant l'étape de roulage peuvent être situées chacune dans un plan parallèle à l'axe 4 de la vis et présenter un angle α ou β avec cet axe 4. L'angle α des rainures 17 est constant tandis que l'angle β des rainures 18 est variable.

Ce mode de réalisation permet de situer une partie importante des moyens d'auto-nettoyage dans la partie ogivale 2 de la vis. Cet avantage est particulièrement important puisqu'il permet de réduire la longueur des rainures sur la partie cylindrique. Pour la même longueur utile, la vis peut être ainsi plus courte.

Dans la variante de réalisation représentée à la figure 4, les rainures 12 sont légèrement décalées les unes par rapport aux autres. Ceci permet d'éventuellement prolonger les moyens d'auto-nettoyage sur la partie cylindrique de la vis, au-delà de la liaison 22.

On peut également prévoir des rainures 19 pratiquées dans l'enveloppe de la vis dont la projection, sur un plan contenant l'axe 4, forme un angle déterminé, constant ou non, avec cet axe. Ce mode de réalisation est illustré sur la figure 5.

D'autres moyens d'auto-nettoyage peuvent être constitués par la forme du filet lui-même, sur l'extrémité ogivale de la vis.

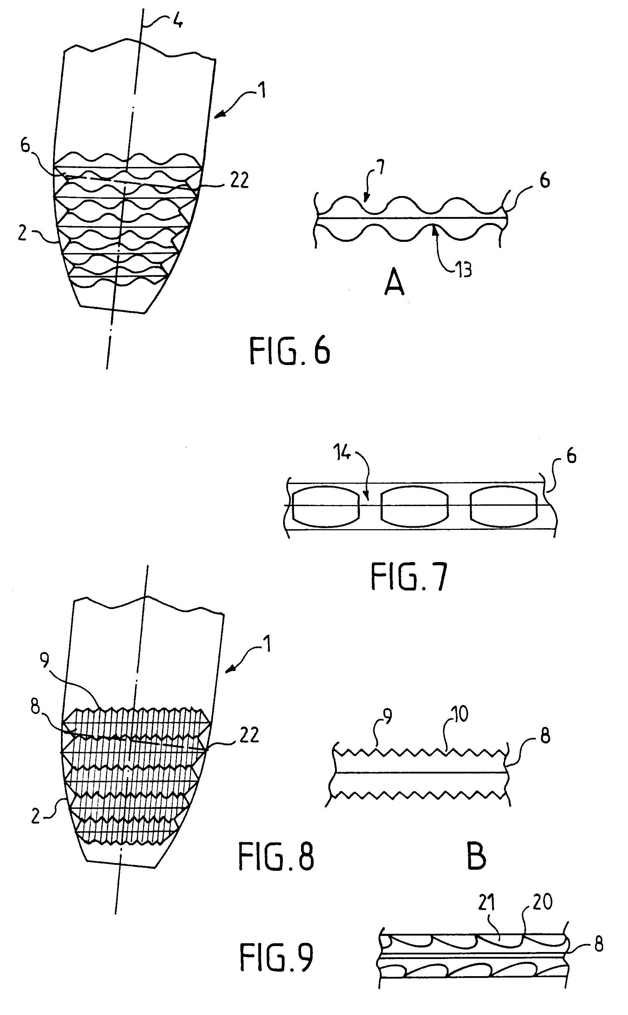

On peut ainsi envisager un filet de section non constante, tel que celui référencé 6 sur la figure 6. Le détail A montre la forme du filet 6 déroulé. Dans les évidements 7, peuvent s'accumuler les déchets qui sont présents dans les filets de l'écrou. Il convient de noter que les filets sont réguliers, en ce qui concerne leur remplissage.

Une telle forme de filet peut notamment être obtenue à partir de rainures, réalisées pendant l'étape de frappe, et présentant une forme appropriée.

Dans la variante représentée à la figure 7, le filet 6 diffère de celui représenté à la figure 6 en ce qu'il est rompu au niveau des parties les plus minces 13. Les déchets peuvent s'accumuler dans les évidements 14.

On peut également prévoir un crantage sur les filets de la vis, au niveau de l'extrémité ogivale, comme cela est illustré à la figure 8. La vis 1 à extrémité ogivale comporte des filets 8 présentant des crans 9. Ceux-ci apparaissent également sur le détail B qui montre un filet 8 déroulé.

Ces crans 9, qui apparaissent sur chaque face du filet, sont obtenus à la fin de l'étape de roulage au moyen de peignes crantés. Dans les espaces 10 ainsi ménagés, les déchets peuvent également s'accumuler.

La figure 9 illustre un filet 8 comportant également des crans 20 présentant une forme différente de celle des crans 9 et ménageant des espaces 21.

Une autre caractéristique des moyens d'auto-nettoyage proposés est qu'ils font appel à un nombre important (supérieur ou égal à 8) de rainures ou de crans. Dans une variante, les rainures sont jointives.

L'objectif est d'effectuer un auto-nettoyage progressif, à l'inverse des systèmes habituels qui se caractérisent souvent par un nombre réduit de rainures profondes ou larges. La multiplicité des rainures ou des crans permet de diminuer la longueur totale des moyens d'auto-nettoyage. Cela permet de diminuer la longueur totale des vis ou d'en augmenter la résistance mécanique.

Une vis à extrémité ogivale obtenue par le procédé selon l'invention peut, lorsqu'elle comporte des moyens d'auto-nettoyage sur la partie ogivale, se redresser pour se placer dans l'axe de l'écrou ou du trou fileté quand elle présente, lors du vissage, un angle inférieur ou égal 5° par rapport à cet axe.

Tous les moyens d'auto-nettoyage qui viennent d'être décrits en référence à une vis à extrémité ogivale peuvent également être appliqués à un écrou ainsi qu'à une vis de forme quelconque, notamment cylindrique, en remplacement des rainures classiques.

On peut également prévoir des moyens d'auto-nettoyage sur la partie cylindrique de la vis à extrémité ogivale.

Dans le cas des écrous, les systèmes d'auto-nettoyage sont souvent caractérisés, soit par des rainures transversantes, soit par des rainures ou des encoches dont la longueur est de l'ordre de 2 à 2,5 filets. L'utilisation de rainures multiples (au moins 8) permet de limiter leur longueur. La longueur utile de l'écrou est donc augmentée ainsi que la charge d'épreuve de l'écrou.

Dans le cas de vis standard, les rainures multiples (en nombre supérieur ou égal à 8) permettent de réduire la longueur totale des moyens d'auto-nettoyage donc d'augmenter la longueur utile de la vis ou de réduire sa longueur totale, à longueur utile constante.

Lors du roulage des vis à bout ogival, les peignes subissent au niveau de l'ogive des efforts très importants.

Ceci est particulièrement sensible pour les vis des classes 10-9, c'est-à-dire des vis très dures ayant, par exemple, subi une trempe.

La présence de rainures dans l'ogive mais également dans la zone de la liaison 22 entre la partie ogivale et la partie cylindrique de la vis diminue considérablement les efforts sur les peignes. Cela augmente leur durée de vie.

Par ailleurs, un nombre important (notamment supérieur ou égal à 8) de rainures, ou de crans, favorise également l'opération de roulage.

Les signes de référence insérés après les caractéristiques techniques mentionnées dans les revendications, ont pour seul but de faciliter la compréhension de ces dernières, et n'en limitent aucunement la portée.

## Revendications

1. Procédé d'obtention d'une vis comprenant successivement une étape de frappe pendant laquelle on réalise la tête et la tige de la vis, puis une étape pendant laquelle on réalise une extrémité ogivale en continuité avec le reste de la tige et enfin, une étape pendant laquelle on forme les filets, caractérisé en ce que les filets sont obtenus par roulage de façon à être régulièrement remplis sur toute la longueur de l'extrémité ogivale, la forme de l'enveloppe de la vis obtenue, après formation des filets, correspondant sensiblement à celle obtenue après formation de l'extrémité ogivale.

2. Procédé selon la revendication 1, caractérisé en ce qu'on réalise l'extrémité ogivale pendant l'étape de frappe en réduisant, à l'extrémité de la tige, le diamètre de celle-ci par une opération de filage puis une opération de chanfreinage par frappe à froid.

3. Procédé selon la revendication 1, caractérisé en ce qu'on réalise l'extrémité ogivale par usinage.

4. Procédé selon l'une des revendications 1 à 3, caractérisé en ce que les moyens utilisés lors de l'étape de roulage pour la formation des filets (11) présentent une enveloppe sensiblement identique à celle de l'extrémité ogivale (2) obtenue avant l'étape de roulage.

5. Procédé selon les revendications 1 à 4, caractérisé en ce qu'il consiste à réaliser des moyens d'auto-nettoyage (5, 7, 10, 14) sur l'extrémité ogivale de la vis.

6. Procédé selon la revendication 5, caractérisé en ce qu'on réalise, avant l'étape de roulage, des rainures (3, 12, 17 à 19) sur l'extrémité ogivale (2) de la vis.

7. Procédé selon la revendication 6, caractérisé en ce que les rainures (3, 12, 17 à 19) présentent une largueur telle que la largeur des rainures (5) obtenues après l'étape de roulage est inférieure à celle d'un filet (11).

8. Procédé selon la revendication 6 caractérisé en ce que la forme des rainures est telle qu'après l'étape de roulage, le filet (6) présente une section non constante ménageant des évidements (7, 14).

9. Procédé selon la revendication 5 caractérisé en ce qu'on réalise des rainures sur l'extrémité ogivale de la vis, pendant l'étape de roulage.

10. Procédé selon l'une des revendications 5 à 9 caractérisé en ce que les rainures (3) sont parallèles à l'axe (4) de la vis.

11. Procédé selon l'une des revendications 5 à 9 caractérisé en ce que les rainures (17, 18, 19) font un angle non nul avec l'axe (4) de la vis.

12. Procédé selon l'une des revendications 5 à 11 caractérisé en ce qu'il consiste à réaliser des crans (9, 20) sur les filets (8) pendant l'étape de roulage, lesdits crans ménageant des espaces (10, 21).

13. Vis à extrémité ogivale présentant une partie cylindrique et une extrémité ogivale en continuité avec la partie cylindrique, caractérisé par un filet (11) dont le sommet (16) est régulièrement rempli sur sensiblement toute la longueur de l'extrémité ogivale.

14. Vis selon la revendication 13 caractérisée en ce qu'elle présente des moyens d'auto-nettoyage (5, 7, 10, 14) sur l'extrémité ogivale (2).

15. Vis à extrémité ogivale selon la revendication 14 caractérisée en ce que les moyens d'auto-nettoyage sont constitués par des rainures (5).

16. Vis à extrémité ogivale selon la revendication 15 caractérisé en ce que le nombre de rainures est supérieur ou égal à 8.

17. Vis à extrémité ogivale selon la revendication 14 caractérisée en que les moyens d'auto-nettoyage sont constitués par les évidements (7, 14) que présente le filet (6) de section variable.

18. Vis à extrémité ogivale selon la revendication 14 caractérisée en ce que les moyens d'auto-nettoyage sont constitués par des espaces (10, 21) ménagés par les crans (9, 20) que présente le filet (8).

## Claims

1. A process for the production of a screw comprising successively a heading phase during which the head and the stem of the screw are made, then a phase during which an ogival end in continuity with the rest of the stem is made and finally, a phase during which the threads are formed, characterised in that the threads are obtained by rolling so that they are filled regularly over the whole length of the ogival end, whereas the shape of the shell of the screw thus produced, after formation of the threads, corresponds more or less to that obtained after formation of the ogival end.

2. A process according to claim 1, characterised in that the ogival end is made during the heading phase by reducing, at the end of the stem, the diameter of the latter by extrusion, then by cold-heading chamfering.

3. A process according to claim 1, characterised in that the ogival end is machined.

4. A process according to one of claims 1 to 3, characterised in that the means used during the rolling phase for the formation of the threads (11) exhibit a shell more or less identical to that of the ogival end (2) obtained before the rolling phase.

5. A process according claims 1 to 4, characterised in that it consists in producing self-cleaning means (5, 7, 10, 14) on the ogival end of the screw.

6. A process according to claim 5, characterised in that, before the rolling phase, grooves (3, 12, 17 to 19) are made on the ogival end (2) of the screw.

7. A process according to claim 6, characterized in that the grooves (3, 12, 17 to 19) exhibit such a width that the breadth of the grooves (5) obtained after the rolling phase is smaller that than of a thread (11).

8. A process according to claim 6 characterised in that the shape of the grooves is such that after the rolling phase, the thread (6) exhibits a non-constant section with provisions for recesses (7, 14).

9. A process according to claim 5 characterised in that grooves are made on the ogival end of the screw, during the rolling phase.

10. A process according to any of the claims 5 to 9 characterised in that the grooves (3) are parallel to the axis (4) of the screw.

11. A process according to one of the claims 5 to 9 characterised in that the grooves (17, 18, 19) form a non-zero angle with the axis (4) of the screw.

12. A process according to one of claims 5 to 11, characterised in that it consists in making notches (9, 20) on the threads (8) during the rolling phase, whereas the said notches can accommodate spaces (10, 21).

13. A screw with ogival end exhibiting a cylindrical section and an ogival end in continuity with the cylindrical section, characterised by a thread (11) whose summit (16) is regularly filled over more or less the whole length of the ogival end.

14. A screw according to claim 13 characterised in that it exhibits self-cleaning means (5, 7, 10, 14) on the ogival end (2).

15. A screw with ogival end according to claim 14 characterised in that the self-cleaning means are made of grooves (5).

16. A screw with ogival end according to claim 15 characterised in that the number of grooves is equal to or greater than 8.

17. A screw with ogival end according to claim 14 characterised in that the self-cleaning means are made by the recesses (7, 14) exhibited by the variable section thread (6).

18. A screw with ogival end according to claim 14 characterised in that the self-cleaning means are made by spaces (10, 21) accommodated by the notches (9, 20) exhibited by the thread (8).

## Patentansprüche

1. Verfahren zur Herstellung einer Schraube, das nacheinander einen Prägeschritt, während dessen der Kopf und der Schaft der Schraube ausgeführt werden, dann einen Schritt, während dessen ein spitzbogenförmiges Ende in stetigem Verlauf mit dem Rest des Schaftes ausgeführt wird, und schließlich einen Schritt umfaßt, während dessen die Gewindegänge ausgebildet werden, dadurch gekennzeichnet, daß die Gewindegänge durch Rollformen so erhalten werden, so daß die gesamte Länge des spitzbogenförmigen Endes gleichmäßig damit ausgefüllt ist, wobei die Form der Umhüllenden der erhaltenen Schraube nach Ausbildung der Gewindegänge im wesentlichen derjenigen entspricht, die nach Ausbildung des spitzbogenförmigen Endes erhalten wurde.

2. Verfahren nach Anspruch 1, dadurch gekennzeichnet, daß das spitzbogenförmige Ende während des Prägeschrittes ausgeführt wird, indem am Ende des Schaftes der Durchmesser dieses Endes durch einen Preßvorgang, dann einen Abschrägungsvorgang durch Kaltstauchung verringert wird.

3. Verfahren nach Anspruch 1, dadurch gekennzeichnet, daß das spitzbogenförmige Ende durch maschinelle Bearbeitung ausgeführt wird.

4. Verfahren nach einem der Ansprüche 1 bis 3, dadurch gekennzeichnet, daß die beim Rollformschritt zur Ausbildung der Gewindegänge (11) verwendeten Mittel eine Umhüllende aufweisen, die im wesentlichen der des vor dem Rollformschritt erhaltenen spitzbogenförmigen Endes (2) gleicht.

5. Verfahren nach den Ansprüchen 1 bis 4, dadurch gekennzeichnet, daß es darin besteht, am spitzbogenförmigen Ende der Schraube Selbstreinigungsmittel (5, 7, 10, 14) auszubilden.

6. Verfahren nach Anspruch 5, dadurch gekennzeichnet, daß vor dem Rollformschritt am spitzbogenförmigen Ende (2) der Schraube Einschnitte (3, 12, 17 bis 19) ausgeführt werden.

7. Verfahren nach Anspruch 6, dadurch gekennzeichnet, daß die Einschnitte (3, 12, 17 bis 19) eine solche Breite aufweisen, daß die Breite der nach dem Rollformschritt erhaltenen Einschnitte (5) geringer als diejenige eines Gewindeganges (11) ist.

8. Verfahren nach Anspruch 6, dadurch gekennzeichnet, daß die Form der Einschnitte derart ist, daß nach dem Rollformschritt der Gewindegang (6) einen nicht konstanten Querschnitt aufweist, der mit Aussparungen versehen ist.

9. Verfahren nach Anspruch 5, dadurch gekennzeichnet, daß während des Rollformschrittes am spitzbogenförmigen Ende der Schraube Einschnitte ausgeführt werden.

10. Verfahren nach einem der Ansprüche 5 bis 9, dadurch gekennzeichnet, daß die Einschnitte (3) zur Achse (4) der Schraube parallel sind.

11. Verfahren nach einem der Ansprüche 5 bis 9, dadurch gekennzeichnet, daß die Einschnitte (17, 18, 19) einen Winkel ungleich Null mit der Achse (4) der Schraube bilden.

12. Verfahren nach einem der Ansprüche 5 bis 11, dadurch gekennzeichnet, daß es darin besteht, während des Rollformschrittes an den Gewindegängen (8) Stufen (9, 20) ausgeführt werden, wobei die Stufen mit Zwischenräumen (10, 21) versehen sind.

13. Schraube mit spitzbogenförmigem Ende, die einen zylindrischen Teil und ein spitzbogenförmiges Ende in stetigem Verlauf mit dem zylindrischen Teil aufweist, gekennzeichnet durch einen Gewindegang (11), dessen Scheitel (16) im wesentlichen die ganze Länge des spitzbogenförmigen Teiles gleichmäßig ausfüllt.

14. Schraube nach Anspruch 13, dadurch gekennzeichnet, daß sie am spitzbogenförmigen Ende (2) Selbstreinigungsmittel (5, 7, 10, 14) aufweist.

15. Schraube mit spitzbogenförmigem Ende nach Anspruch 14, dadurch gekennzeichnet, daß die Selbstreinigungsmittel aus Einschnitten (5) bestehen.

16. Schraube mit spitzbogenförmigem Ende nach Anspruch 15, dadurch gekennzeichnet, daß die Anzahl der Einschnitte größer oder gleich 8 ist.

17. Schraube mit spitzbogenförmigem Ende nach Anspruch 14, dadurch gekennzeichnet, daß die Selbstreinigungsmittel aus Aussparungen (7, 14) bestehen, durch die der Gewindegang (6) im Querschnitt variabel ist.

18. Schraube mit spitzbogenförmigem Ende nach Anspruch 14, dadurch gekennzeichnet, daß die Selbstreinigungsmittel aus Zwischenräumen (10, 21) bestehen, die durch die Stufen (9, 20) vorgesehen sind, die der Gewindegang (8) aufweist.
